Europäisches Patentamt

European Patent Office

Office européen des brevets

(11) Veröffentlichungsnummer: **0 304 550 B1**

(12) **EUROPÄISCHE PATENTSCHRIFT**

(45) Veröffentlichungstag der Patentschrift: **18.03.92**

(21) Anmeldenummer: **88108076.6**

(22) Anmeldetag: **20.05.88**

(51) Int. Cl.⁵: **B44F 7/00**, D21H 27/00, D06N 7/00, B41M 3/18

(54) **Verfahren zur Herstellung dreidimensionaler Muster oder Beschichtungen auf Trägerbahnen aus Papier, Textilien und/oder auf Kunststoffolien.**

(30) Priorität: **26.08.87 DE 3728773**

(43) Veröffentlichungstag der Anmeldung:
**01.03.89 Patentblatt 89/09**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**AT-A- 325 864**
**DE-A- 1 619 209**
**DE-A- 2 755 078**
**GB-A- 2 033 395**
**US-A- 4 044 176**

**CHEMICAL ABSTRACTS, Band 90, Nr. 24, 11. Juni 1979, Seite 108, Nr. 188836n, Columbus, Ohio, US;**

**ABSTRACT BULLETIN OF INST. OF PAPER CHEM., Band 50, Nr. 5, November 1979, Seite 540, Nr. 5098, Columbus, Ohio, US;**

(73) Patentinhaber: **OPTIPLAST Gesellschaft für Kunststoffspezialbeschichtungen mbH i.G.**
**Essener Strasse 60**
**W-5600 Wuppertal 11(DE)**

(72) Erfinder: **Jülich, Günter**
**An der Vorburg 14**
**W-4234 Alpen(DE)**
Erfinder: **Hechler, Alfred**
**Heinrichstrasse 85**
**W-4630 Bochum(DE)**
Erfinder: **Stephan, Walter**
**von Köckeritzstrasse 9**
**W-4630 Bochum(DE)**
Erfinder: **Horn, Michael**
**Hofstederstrasse 149**
**W-4630 Bochum(DE)**

## Beschreibung

Die vorliegende Erfindung betrifft ein Verfahren zur Herstellung dreidimensionaler Muster oder Beschichtungen auf Trägerbahnen aus Papier, Textilien und/oder auf Kunststoffolien, insbesondere zur Herstellung von Wandbekleidungen, wobei ein Polyvinylchloridplastisol, bestehend aus 30 - 60 Gew.-%, vorzugsweise 32 - 53 Gew.-%, Vinylchloridhomo-, -co- oder terpolymerisat, 39 - 1 Gew.-%, vorzugsweise 26 - 6 Gew.-%, Füllstoffe, Pigmente und/oder Farbstoffe, 6 - 35 Gew.-%, vorzugsweise 20 - 33 Gew.-%, Weichmacher und/oder Weichmachergemisch sowie gegebenenfalls einem Verdünnungsmittel oder Verdünnungsmittelgemisch, 9 - 2 Gew.-%, vorzugsweise 8 - 4 Gew.-%, mindestens eines Aditives und/oder Verarbeitungshilfsmittels sowie mindestens einem weiteren Zusatzstoff, auf die Trägerbahn oder Folie aufgebracht und in der Hitze ausgeliert wird.

Es ist bereits bekannt, Tapeten mit Plastisolen zu beschichten und gegebenenfalls das aufgebrachte Plastisol im feuchten Zustand mit einem Farbstoffauftrag zu versehen. Das organisch-chemische Treibmittel enthaltende Plastisol wird unter Anwendung von Hitze bei etwa 200 - 250 ° C unter Zersetzung des Treibmittels aufgeschäumt (vgl. u.a. DE-OS 27 55 078).

Nachteilig ist jedoch u.a., daß chemische, sich bei der Hitze zersetzende Treibmittel eingesetzt werden müssen und die Verfahrenstemperaturen im allgemeinen relativ hoch liegen, so daß eine erhebliche Energie für den Aufschäumvorgang benötigt wird.

Aus der GB-A-2 033 395 ist weiterhin bereits ein Polyvinylchlorid-Plastisol bekannt, das neben Vinylchloridhomopolymerisat Füllstoff, Weichmacher, Treibmittel und für die Treibmittel erforderliche Aktivatoren sowie Mikrohohlkugeln enthält und in einem Ofen auf ca. 200 ° C erhitzt werden muß, um zu gelieren und auszuschäumen.

Aus der US-A-4 044 176 ist weiterhin ein Material für graphische Zwecke bekannt, mit dem dreidimensionale Strukturen gebildet werden können und das einen erheblichen Anteil an organisch-chemischen Lösemitteln, einen polymeren Film bildendes Mittel, Polyvinylidenchloridmikrohohlkörper mit einem Teilchendurchmesser von 0,5 bis 300 $\mu$m enthält, die auf ihrer Oberfläche mit einem Alkylalkohol mit 3 bis 5 C-Atomen benetzt sind. Aufgrund des Lösemittelanteiles wird die Masse bei Temperaturen von 90 bis 150 ° C, vorzugsweise 100 bis 120 ° C, expandiert.

Aus der DE-A-1 619 209 ist weiterhin ein strukturierter Wandbelag auf der Basis eines füllstoffhaltigen Kunststoff-Schaumstoffes bekannt, wobei man eine treibmittelhaltige Polyvinylchloridpaste mit 5 bis 25 Gew.% eines feinteiligen, verschäumbaren Polystyrols mit einem Teilchendurchmesser von 0,5 bis 2,0 mm, das bevorzugt 2 bis 5 Gew.-% eines aromatischen Kohlenwasserstoffes enthält, bei unter 160 bis 200 ° C expandiert.

Ziel und Aufgabe der vorliegenden Erfindung war es, ein verbessertes Verfahren zur Herstellung dreidimensionaler Muster oder Beschichtungen bei Verwendung von Polyvinylchloridplastisolen zu finden. So soll u.a. die Verarbeitungstemperatur innerhalb des Verfahrens niedriger gehalten werden können.

Erfindungsgemäß wurde festgestellt, daß diesen Zielen und Aufgaben ein Verfahren zur Herstellung dreidimensionaler Muster oder Beschichtungen auf Trägerbahnen aus Papier, Textilien und/oder auf Kunststoffolien, insbesondere zur Herstellung von Wandbekleidungen gerecht wird, wobei ein Polyvinylchloridplastisol, bestehend aus 30 - 6 Gew.-%, vorzugsweise 32 - 53 Gew.-%, Vinylchloridhomo- , -co- oder terpolymerisat, 31 - 1 Gew.-%, vorzugsweise 26 - 6 Gew.-%, Füllstoffe, Pigmente und/oder Farbstoffe, 6 - 35 Gew.-%, vorzugsweise 20 - 33 Gew.-%, Weichmacher und/oder Weichmachergemisch sowie gegebenenfalls Verdünnungsmittel, 9 - 2 Gew.-%, vorzugsweise 8 - 4 Gew.-%, mindestens eines Additivs und/oder Verarbeitungshilfsmittels sowie mindestens einem weiteren Zusatzstoff, auf die Trägerbahn oder Folie aufgebracht und in der Hitze ausgeliert wird.Gemäß der Erfindung sind in dem Plastisol als weiterer Zusatzstoff 16 - 2 Gew.-%, vorzugsweise 14 - 4 Gew.-%, Mikrohohlkörper mit einem mittleren Teilchendurchmesser von 2 - 80 $\mu$m, vorzugsweise 5 - 40 $\mu$m, enthalten, die mit einem Gas oder einer organisch-chemischen Flüssigkeit gefüllt sind. Das Plastisol wird im Druckverfahren, vorzugsweise Siebdruck-oder Tiefdruckverfahren, aufgebracht und bei Temperaturen von 105 - 165 ° C, vorzugsweise 110 - 155 ° C, erhitzt, wobei die gefüllten Mikrohohlkörper sich um ein Mehrfaches ihres Volumens ausdehnen das Plastisol an den Stellen der jeweils eingeschlossenen Mikrohohlkörper aufgebläht wird und das Plastisol ausgeliert.

Nach einer bevorzugten Ausführungsform wird ein Polyvinylchlorid-Plastisol eingesetzt, in dem 29 - 0 Gew.-%, vorzugsweise 17 - 3 Gew.-%, mindestens eines Füllstoffes oder Füllstoffgemisches und 10 - 1 Gew.-%, vorzugsweise 9 - 3 Gew.-%, mindestens eines Pigmentes, Pigmentgemisches und/oder eines Farbstoffes oder Farbstoffgemisches enthalten sind.

Das Polyvinylchlorid-Plastisol wird auf eine, auf der Trägerbahn teil- oder vollflächig aufgedruckte, aufgerollte oder darauf angeordnete Farb- oder Druckschicht so aufgebracht, daß es die Trägerschicht und/oder Farb- oder Druckschicht teilweise bedeckt.

Das aufgebrachte Plastisol wird auf Temperaturen zwischen 105 und 165 °C, vorzugsweise 120 bis 155 °C, erhitzt und geliert.

Nach einer bevorzugten Ausführungsform des erfindungsgemäßen Verfahrens wird auf die teil- oder vollflächig auf der Trägerbahn angeordnete Farb- oder Druckschicht und/oder auf die Trägerbahn teilflächig das Plastisol in Form von Mustern, Buchstaben, Zahlen oder Figuren aufgebracht und das aufgebrachte Plastisol auf Temperaturen von 105 - 165 °C, vorzugsweise 110 - 155 °C, erhitzt, wobei die gefüllten Mikrohohlkörper sich um ein Mehrfaches ihres Volumens ausdehnen, das Plastisol an den Stellen der jeweils eingeschlossenen Mikrohohlkörper aufgebläht und das Plastisol ausgeliert.

Gemäß dem erfindungsgemäßen Verfahren wird die Wandungsdicke der im Plastisol enthaltenen Mikrohohlkörper und/oder die Kunststoffzusammensetzung der Mikrohohlkörper so gewählt, daß bei Temperaturen bis 165 °C ein Platzen der gefüllten Mikrohohlkörper nicht auftritt und die Kunststoff-Mikrohohlkörperwandung durch die im Plastisol enthaltenen Weichmacher bei der Lagerung nicht beschädigt wird und/oder bei dem Erhitzen auf 165 °C ein Platzen der Mikrohohlkörper eintritt. Auch das Polyvinylchloridplastisol wird in seiner Zusammensetzung, insbesondere der Weichmacher und evtl. Verdünnungsmittel so eingestellt, daß eine Beschädigung der Mikrohohlkörper nicht eintritt.

Die Wandungen der im Plastisol enthaltenen Mikrohohlkörper bestehen bevorzugt aus einem Fluorpolymeren, einem Vinyliden- oder Vinylchlor- oder -fluorpolymeren oder einem Copolymerisat oder Legierung derselben mit einem anderen Kunststoff oder einem anderen Monomeren zur Herstellung des Copolymerisates, oder enthalten diese. Bevorzugt werden Vinylidenchlorid und/oder Vinylchloridhomo- oder -copolymerisate eingesetzt.

Nach einer bevorzugten Ausführungsform enthalten die Mikrohohlkörper einen bei Raumtemperatur gasförmigen Kohlenwasserstoff, vorzugsweise einen gesättigten Kohlenwasserstoff mit $C_3$ - $C_5$, allein oder als Mischungsbestandteil mit einem anderen Gas.

Nach einer anderen bevorzugten Ausführungsform werden vorzugsweise beim Weichmacheranteil 0 - 7 Gew.-%, vorzugsweise 0,1 - 4 Gew.-%, Verdünnungsmittel (bezogen auf das Gesamtgewicht des Plastisols), vorzugsweise aromatenfreie Verdünnungsmittel mitverwendet. Bevorzugt wird aromatenfreies Testbenzin als Verdünnungsmittel allein oder in Kombination mit anderen Verdünnungsmitteln eingesetzt.

Gemäß dem erfindungsgemäßen Verfahren gelingt es, ohne Verwendung oder Mitverwendung der an sich bekannten chemischen Treibmittel, die sich bei noch höheren Temperaturen unter Gasbildung zersetzen, das Plastisol so aufzublähen, daß eine schaumähnliche Struktur entsteht und die Mikrohohlkörper, die mit Gas oder Flüssigkeit auch nach dem Aufblähen im gefüllten Zustand verbleiben, weitgehend unbeschädigt zu erhalten. Dadurch erzielt man die Vorteile, daß normale Tiefdruck- und Rotationssiebdruckmaschinen mit üblichen Trocknungseinrichtungen zum dreidimensionalen Bedrucken von Papier, Kunststoffolien, Pappe und anderen Substraten einsetzbar werden.

Weiterhin sind niedrige Aufschäumtemperaturen von 105 - 165, vorzugsweise 110 - 155 °C im Vergleich zu PVC-Schäumen (200 - 220 °C), die durch chemische Zersetzung der Treibmittel in aufwendigen Trocknungsanlagen aufschäumen, erforderlich.

Eine Energiekosteneinsparung erfolgt sowie gegebenenfalls der Wegfall der notwendigen Nachverbrennung wie sie bei chemischen Schäumen im hohen Temperaturbereich notwendig.

Im Vergleich zu üblichen wässrigen Acrylschäumen findet keine Verdunstung der bei Acrylschäumen enthaltenen großen Wassermengen von ca. 30 - 40 Gew.-% statt.

Es ist eine sehr gute Adhesion und Kohäsion der Schäume vorhanden, verglichen mit wässrigen Acrylschäumen.

Weiterhin lassen sich auch matte Oberflächen im Vergleich zu chemischen treibmittelhaltigen PVC-Schäumen erzielen.

Beispiele:

Beispiel 1:

| | |
|---|---|
| 49 Gew.-% | Polyvinylchlorid (E-PVC oder S-PVC) |
| 6,5 Gew.-% | Pigmente, vorzugsweise Titandioxid sowie temperaturbeständige Buntpigmente |
| 26 Gew.-% | Weichmachergemisch, bestehend aus Dioctylphthalat (DOP), Diisononylphthalat (DINP), Benzylbutylphthalat (BBP) und/oder Diisodecylphthalat (DIDP) |
| 5 Gew.-% | Verarbeitungshilfsmittel, bestehend insbesondere aus Gleitmittel zur Stabilisierung, zur Benetzung und zur Verdünnung des Beschichtungsmaterials. |
| 13,5 Gew.-% | Mikrohohlkörper mit einem mittleren Teilchendurchmesser von 7,5 $\mu$m, gefüllt mit einem gesättigten $C_4$-Kohlenwasserstoff |

Beispiel 2:

| | |
|---|---|
| 40 Gew.-% | PVC (E-PVC oder S-PVC) |
| 15 Gew.-% | Pigmente, einschließlich Füllstoffe, bestehend aus Titandioxid, Calciumcarbonat und Füllstoffen auf der Basis von Silikaten |
| 28 Gew.-% | Weichmachergemisch, bestehend aus DOP, BBP und/oder DINP |
| 1 Gew.-% | Testbenzin, aromatenfrei |
| 6 Gew.-% | Verarbeitungshilfsmittel, nämlich Additive, vorzugsweise Stabilisatoren, Netzmittel, Verdünnungsmitel und Entlüftungsmittel |
| 10 Gew.-% | Mikrohohlkörper mit einem mittleren Teilchendurchmesser von 10 µm |

Beispiel 3 :

Plastisole gemäß Beispielen 1 und 2 werden auf eine Papierbahn mit einem Auftragsgewicht von 30 - 80 g/qm im Siebdruckverfahren aufgebracht und auf eine Temperatur von 130 °C erhitzt. Hiebei blähen sich die gefüllten Mikrohohlkörper um ein mehrfaches ihres Volumens aus, das Plastisol ergibt einen dreidimensionalen, feinzelligen Schaum auf der Papierbahn.

Plastisole nach den Beispielen 1 und 2 wurden auf einer normalen Rotationstiefdruckmaschine auf Kunststoffolien und Papier aufgedruckt. Die Auftragsmengen lagen bei 20 - 60 g/qm. Nach Trocknung und Gelierung des Plastisoles erhält man einen feinzelligen, dreidimensionalen Schaum, der beliebig colorierbar ist.

**Patentansprüche**

1. Verfahren zur Herstellung dreidimensionaler Muster oder Beschichtungen auf Trägerbahnen aus Papier, Textilien und/oder auf Kunststoffolien, insbesondere zur Herstellung von Wandbekleidungen, wobei ein Polyvinylchloridplastisol, das frei von chemischen Treibmitteln ist, verwendet wird, das
30 bis 60 Gew.-%, vorzugsweise
32 bis 53 Gew.-%,
Vinylchloridhomo-, -co- oder -terpolymerisat,
39 bis 1 Gew.-%, vorzugsweise
26 bis 6 Gew.-%,
Füllstoffe, Pigmente und/oder Farbstoffe,
6 bis 35 Gew.-%, vorzugsweise
20 bis 33 Gew.-%,
Weichmacher und/oder Weichmachergemisch sowie gegebenenfalls Verdünnungsmittel,
9 bis 2 Gew.-%, vorzugsweise
8 bis 4 Gew.-%,
mindestens eines Additivs und/oder Verarbeitungshilfsmittels,
16 bis 2 Gew.-%, vorzugsweise
14 bis 4 Gew.-%,
Mikrohohlkörper mit einem mittleren Teilchendurchmesser von
2 bis 80 µm, vorzugsweise
5 bis 40 µm,
die mit einem Gas oder einer organisch-chemischen Flüssigkeit gefüllt sind, enthält, und das Plastisol im Druckverfahren, vorzugsweise Siebdruck- oder Tiefdruckverfahren auf die Trägerbahn oder Folie aufgebracht und bei Temperaturen von
105 bis 165 °C, vorzugsweise
110 bis 155 °C,
erhitzt wird, wobei die gefüllten Mikrohohlkörper sich um ein Mehrfaches ihres Volumens ausdehnen, das Plastisol an den Stellen der jeweils eingeschlossenen Mikrohohlkörper aufgebläht wird und das Plastisol ausgeliert.

2. Verfahren nach Anspruch 1, dadurch gekennzeichnet, daß ein Polyvinylchlorid-Plastisol eingesetzt wird, in dem
29 bis 0 Gew.-%, vorzugsweise
17 bis 3 Gew.-%,
mindestens eines Füllstoffes oder Füllstoffgemisches und
10 bis 1 Gew.-%, vorzugsweise
9 bis 3 Gew.-%,
mindestens eines Pigmentes, Pigmentgemisches und/oder eines Farbstoffes oder Farbstoffgemisches enthalten sind.

3. Verfahren zur Herstellung dreidimensional beschichteter Tapeten unter Verwendung des Polyvinylchlorid-Plastisols nach Ansprüchen 1 und 2, dadurch gekennzeichnet, daß das Polyvinylchlorid-Plastisol auf eine auf der Trägerbahn teil- oder vollflächig aufgedruckte, aufgerollte oder darauf angeordnete Farb- oder Druckschicht so aufgebracht wird, daß es die Trägerschicht und/oder die Farb- oder Druckschicht teilweise bedeckt und das aufgebrachte Plastisol auf Temperaturen zwischen
105 bis 165 °C, vorzugsweise
120 bis 155 °C,
erhitzt wird.

4. Verfahren nach einem oder mehreren der Ansprüche 1 bis 3, dadurch gekennzeichnet, daß auf die teil- oder vollflächig auf der Trägerbahn angeordnete Farb- oder Druckschicht und/oder auf die Trägerbahn teilflächig das Plastisol in Form von Mustern, Buchstaben, Zahlen oder Figuren aufgebracht und das aufgebrachte Plastisol auf Temperaturen von

105 bis 165 °C, vorzugsweise
110 bis 155 °C,
erhitzt wird, wobei die gefüllten Mikrohohlkörper sich um ein Mehrfaches ihres Volumens ausdehnen, das Plastisol an den Stellen der jeweils eingeschlossenen Mikrohohlkörper aufgebläht wird und das Plastisol ausgeliert.

5.  Verfahren nach einem oder mehreren der Ansprüche 1 bis 3, dadurch gekennzeichnet, daß die Wandungsdicke der im Plastisol enthaltenen Mikrohohlkörper und/oder die Kunststoffzusammensetzung der Mikrohohlkörper so gewählt wird, daß bei Temperaturen bis 165 °C ein Platzen der gefüllten Mikrohohlkörper nicht auftritt und die Kunststoff-Mikrohohlkörperwandung durch die im Plastisol enthaltenen Weichmacher bei der Lagerung nicht beschädigt wird und/oder bei dem Erhitzen auf 165 °C ein Platzen der Mikrohohlkörper eintritt.

6.  Verfahren nach einem oder mehreren der Ansprüche 1 bis 5, dadurch gekennzeichnet, daß die im Plastisol enthaltenen Wandungen der Mikrohohlkörper aus einem Fluorpolymeren, einem Vinyliden- oder Vinylchlor- oder -fluorpolymeren oder einem Copolymerisat oder Legierung derselben bestehen oder diese enthalten.

7.  Verfahren nach einem oder mehreren der Ansprüche 1 bis 6, dadurch gekennzeichnet, daß die Mikrohohlkörper einen bei Raumtemperatur gasförmigen Kohlenwasserstoff, vorzugsweise einen gesättigten Kohlenwasserstoff mit $C_3$ bis $C_5$, allein oder als Mischungsbestandteil mit einem anderen Gas enthalten.

## Claims

1.  Method for the manufacturing of three-dimensional designs or coverings on supporting webs made of paper, textile and/or synthetic sheetings, in particular for the manufacturing of wall coverings, whereby a polyvinyl chloride plastisol, free of chemical expanding agents is used, comprising
    30 to 60 % by weight, preferably
    32 to 53 % by weight,
    homo-, -co- or -terpolymer of vinylchloride,
    39 to 1 % by weight, preferably
    26 to 6 % by weight,
    fillers, pigments and/or dyestuffs,
    6 to 35 % by weight, preferably
    20 to 33 % by weight,
    plasticizers and/or mixture of plasticizers and possibly thinner,
    9 to 2 % by weight, preferably

8 to 4 % by weight,
at least of one additive and/or processing aid,
16 to 2 % by weight, preferably
14 to 4 % by weight,
microspheres with an average particle diameter of
2 to 80 $\mu$m, preferably
5 to 40 $\mu$m,
filled with a gas or an organic-chemical liquid whereby the plastisol is applied by printing, preferably film printing or gravure printing onto the supporting web or sheet and heated at temperatures of
105 to 165 °C, preferably
110 to 155 °C,
wherein the filled microspheres are extending to a multiple of their volume, the plastisol is bulking up at the place of each enclosed microsphere and completely gelatinates.

2.  Method according to claim 1, characterized in that a polyvinyl chloride plastisol is used containing
    29 to 0 % by weight, preferably
    17 to 3 % by weight,
    of at least one filler or mixture of fillers and
    10 to 1 % by weight, preferably
    9 to 3 % by weight,
    of at least one pigment, mixture of pigments and/or one dyestuff or mixture of dyestuffs.

3.  Method for the manufacturing of three-dimensional coated wallpaper using a polyvinyl chloride plastisol according to claims 1 and 2, characterized in that the polyvinyl chloride plastisol is applied onto a colour or printing layer, which is printed, rolled or applied onto parts or the whole of the surface of the supporting web in such a manner that it partly covers the supporting layer and/or the colour or printing layer and the applied plastisol is heated to temperatures from
    105 to 165 °C, preferably
    120 to 155 °C.

4.  Method according to any one or several of claims 1 to 3, characterized in that the plastisol is applied in the form of designs, letters, figures or shapes on the colour or printing layer applied on parts or the whole of the supporting web or partly on the supporting web, and the applied plastisol is heated to temperatures from
    105 to 165 °C, preferably
    110 to 155 °C,
    whereby the filled microspheres are extending to a multiple of their volume, the plastisol is bulking up at the place of each enclosed microsphere and the plastisol completely gelatinates.

5. Method according to one or several of claims 1 to 3, characterized in that the wall thickness of the microspheres contained in the plastisol and/or the plastic compound of the microspheres is thus selected that at temperatures up to 165 °C a bursting of the filled microspheres does not occur and the plastic wall of the microspheres will not be damaged during storage by the plastisol, and/or that a bursting of the microspheres will occur at heating to a temperature of 165 °C.

6. Method according to any or any several of claims 1 to 5, characterized in that the walls of the microspheres contained in the plastisol consist of or comprise a fluoro polymer, vinylidene- or vinylchloride polymer or a copolymer or an alloy of them.

7. Method according to one or several of claims 1 to 6, characterized in that the microspheres comprise a hydrocarbon, being gaseous at ambient temperature, preferably a saturated hydrocarbon with $C_3$ to $C_5$, alone or as a component of a mixture with another gas.

## Revendications

1. Procédé pour la fabrication de dessins à trois dimensions ou d'enductions sur des pans de support en papier, matières textiles et/ou sur des feuilles en matières plastiques, en particulier pour la fabrication de revêtements muraux, dans lequel un plastisol de chlorure de polyvinyle étant exempt d'agents moussant chimiques et contenant
30 à 60 % en poids, de préférence
32 à 53 % en poids,
d'un homopolymère, copolymère ou terpolymère de chlorure vinylique,
39 à 1 % en poids, de préférence
26 à 6 % en poids
de matières de charge, pigments et/ou de matières colorantes,
6 à 35 % en poids, de préférence
20 à 33 % en poids
d'un plastifiant et/ou mélange de plastifiants et éventuellement de diluants,
9 à 2 % en poids, de préférence
8 à 4 % en poids,
d'au moins un additif et/ou produit auxiliaire,
16 à 2 % en poids, de préférence
14 à 4 % en poids
des microcorps creux présentant un diamètre moyen de particules de

2 à 80 μm, de préférence
5 à 40 μm,
qui sont remplis d'un gaz ou d'une liquide chimique organique, et le plastisol est appliqué par le procédé d'impression, de préférence par le procédé de sérigraphie ou de héliogravure sur le pan de support ou feuille et chauffé à des températures de
105 à 165 °C, de préférence
110 à 155 °C,
et les microcorps creux remplis s'étendent à un multiple de leur volume, alors que le plastisol se gonfle aux endroits des microcorps creux enfermés respectivement, et le plastisol gélifie complètement.

2. Procédé selon revendication 1, caractérisé en ce qu'un plastisol de chlorure de polyvinyle est utilisé qui contient
29 à 0 % en poids, de préférence
17 à 3 % en poids
au moins d'une matière de charge ou d'une mélange de matières de charge, et
10 à 1 % en poids, de préférence
9 à 3 % en poids
au moins d'un pigment ou d'une mélange de pigments et/ou d'une matière colorante ou mélange de matières colorantes.

3. Procédé pour la fabrication de revêtements muraux pourvus d'une enduction à trois dimensions en utilisant le plastisol de chlorure de polyvinyle selon revendications 1 et 2, caractérisé en ce que le plastisol de chlorure de polyvinyle est appliqué sur une couche de couleur ou d'impression imprimée, laminée ou aménagée en partie ou entièrement sur le pan de support de telle manière qu'il couvre en partie le pan de support et/ou la couche de couleur ou d'impression et que le plastisol appliqué est chauffé à des températures entre
105 à 165 °C, de préférence
120 à 155 °C.

4. Procédé selon un ou plusieurs des revendications 1 à 3, caractérisé en ce que le plastisol est appliqué en partie, sous forme de dessins, lettres, chiffres ou figures sur la couche de couleur ou d'impression aménagée en partie ou entiérement sur le pan de support et/ou en partie sur le pan de support, et que le plastisol appliqué est chauffé à des températures de
105 à 165 °C, de préférence
110 à 155 °C,
et où les microcorps creux remplis s'étendent à un multiple de leur volume, le plastisol se gonfle aux endroits des microcorps enfermés respectivement, et le plastisol gélifie complètement.

5. Procédé selon un ou plusieurs des revendications 1 à 3, caractérisé en ce que l'épaisseur des parois des microcorps creux compris dans le plastisol et/ou la composition de matières plastiques des microcorps creux sont choisies de telle manière qu'à des températures jusqu'à 165 °C un éclatement des microcorps creux remplis ne se produise pas et que le paroi en matière plastique des microcorps creux ne soit pas endommagé au cours du stockage par les plastifiants contenus dans le plastisol, et/ou que lors d'un chauffage à une température de 165 °C un éclatement des microcorps creux se produise.

6. Procédé selon un ou plusieurs des revendications 1 à 5, caractérisé en ce que les parois des microcorps creux contenus dans le plastisol consistent en un polymère de fluor, un polymère de vinylidène, de chlorure de vinyle ou fluorure de vinyle ou d'un copolymère ou d'un alliage de ceux-ci, ou qu'ils comprennent ceux-ci.

7. Procédé selon un ou plusieurs des revendications 1 à 6, caractérisés en ce que les microcorps creux contiennent un hydrocarbure étant gazeux à température ambiante, de préférence un hydrocarbure saturé avec $C_3$ jusqu'à $C_5$, seul ou en tant que constituant d'une mélange en combinaison avec un autre gaz.